# EUROPEAN PATENT APPLICATION

(11) **EP 2 166 692 A1**
(43) Date of publication of application: **24.03.2010**
(21) Application number: 09170120.1
(22) Date of filing: 11.09.2009
(51) Int. Cl.: H04L 1/18

(54) **HARQ processing method based on maximum number of transmissions**

(30) Priority: 17.09.2008 US 97850 P; 29.07.2009 KR 20090069218
(71) Applicant: LG Electronics Inc., Seoul 150-721 (KR)
(72) Inventor: Park, Sung Jun, Gyeonggi-do 431-749 (KR); Yi, Seung June, Gyeonggi-do 431-749 (KR); Lee, Young Dae, Gyeonggi-do 431-749 (KR); Chun, Sung Duck, Gyeonggi-do 431-749 (KR)
(74) Representative: Cabinet Plasseraud

(57) **Abstract**

A method for performing a Hybrid Automatic Repeat reQuest (HARQ) operation in a User Equipment (UE) in a mobile communication system is disclosed. The method includes flushing an HARQ buffer corresponding to an HARQ process, if the number of transmissions in the HARQ process is equal to a maximum number of transmissions, receiving a downlink control channel signal including an uplink grant indicating the HARQ process from a base station, determining whether the HARQ buffer is empty, and transmitting new data via uplink resources indicated by the received uplink grant, if the HARQ buffer is empty.

## Description

### BACKGROUND OF THE INVENTION

### Field of the Invention

The present invention relates to a Hybrid Automatic Repeat reQuest (HARQ) processing technique for reducing uplink resource consumption caused by a reception error of an Uplink (UL) grant during an HARQ process of a User Equipment (UE) in a mobile communication system.

### Discussion of the Related Art

As an example of a mobile communication system to which the present invention can be applied, a third generation partnership project long term evolution (3GPP LTE) communication system will be described in brief.

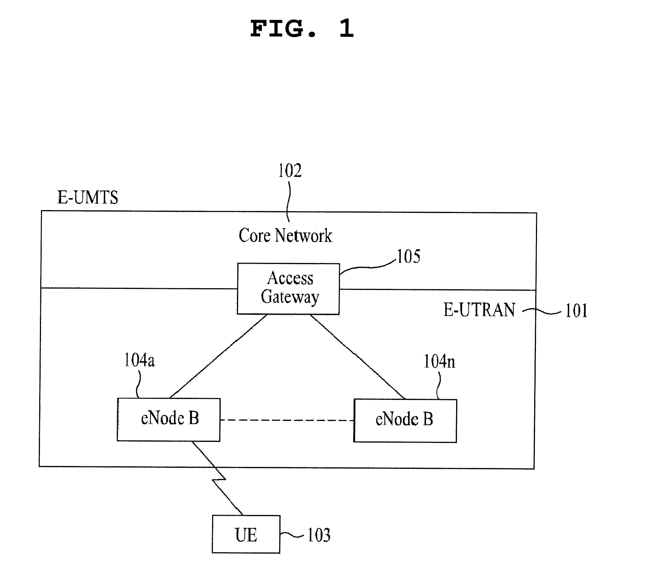

FIG. 1 is a diagram illustrating a network structure of an E-UMTS (Evolved-Universal Mobile Telecommunications System) which is a mobile communication system. An E-UMTS is a system evolving from the conventional universal mobile telecommunication system (UMTS) and its basic standardization is currently handled by the 3GPP. Generally, The E-UMTS may be called a long term evolution (LTE) system.

The E-UMTS network may largely be classified into a UMTS terrestrial radio access network (E-UTRAN) 101 and a core network (CN) 102. The E-UTRAN 101 includes a user equipment (UE) 103, a base station (eNode-B or eNB) 104, and an access gateway (AG) which is located at an end of the network and is connected to an external network. The AG 105 may be classified into a part for handling user traffic and a part for handling control traffic. At this time, an AG for handling new user traffic may communicate with another AG for handling control traffic via a new interface.

At least one cell exists in one eNB. An interface for transmitting user traffic or control traffic may be located between eNBs. The CN 102 may include the AG 105 and a node for performing user registration for the UE 103. An interface may also be used to distinguish the E-UTRAN 101 from the CN 102.

Layers of a radio interface protocol between a UE and a network can be classified into a first layer L1, a second layer L2 and a third layer L3 based on three lower layers of an OSI (open system interconnection) reference model widely known in communication systems. A physical layer belonging to the first layer L1 provides an information transfer service using a physical channel. A radio resource control (hereinafter, abbreviated as 'RRC') layer located at the third layer plays a role in controlling radio resources between the UE and the network. For this, the RRC layer enables RRC messages to be exchanged between the UE and the network. The RRC layer may distributively be located at network nodes including the eNode B 104, the AG 105 and the like, or may independently be located at either the eNode B 104 or the AG 105.

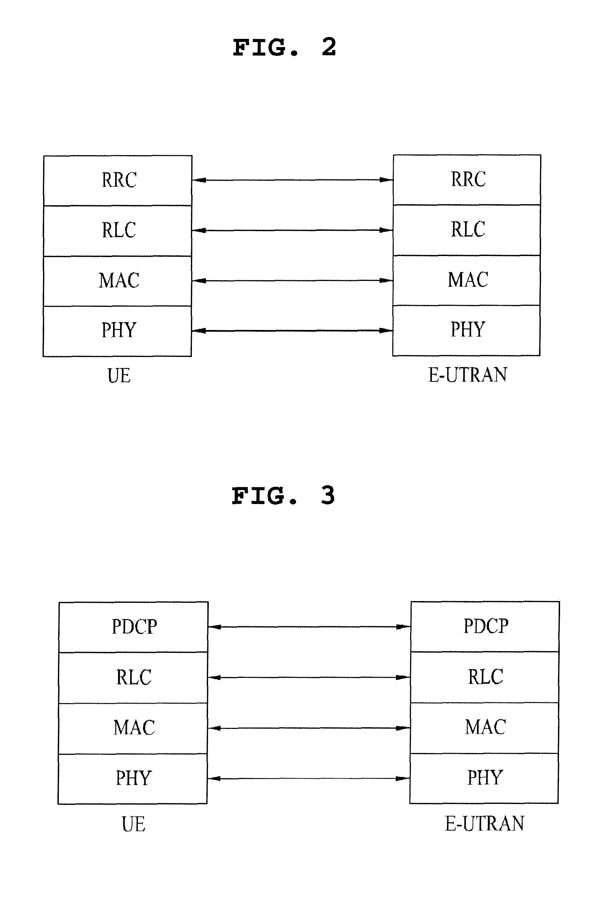

FIGs. 2 and 3 are diagrams illustrating a radio interface protocol architecture between a UE and a UTRAN based on the 3GPP radio access network standard.

The radio interface protocol of FIG. 2 and FIG. 3 is horizontally divided into a physical layer PHY, a data link layer and a network layer, and is vertically divided into a user plane for transmitting data information and a control plane for control signaling. In detail, FIG. 2 illustrates layers of the radio protocol control plane and FIG. 3 illustrates the layers of the radio protocol user plane. The protocol layers of FIG. 2 and FIG. 3 may be divided into a first layer (L1), a second layer (L2) and a third layer (L3) based on the three lower layers of an open system interconnection (OSI) reference model which is well-known in the art of communication systems.

Hereinafter, each layer of the radio protocol control plane of FIG. 2 and the radio protocol user plane of FIG. 3 will be described.

The physical layer PHY, which is the first layer, provides an information transfer service to an upper layer by using a physical channel. The physical layer is connected with a medium access control (MAC) layer located at a higher level through a transport channel, and data between the MAC layer and the physical layer is transferred via the transport channel. At this time, the transport channel is divided into a dedicated transport channel and a common transport channel depending on channel sharing. Between different physical layers, namely, between physical layers of a transmitter and a receiver, data is transferred via the physical channel using radio resources.

Several layers exist in the second layer. First of all, the MAC layer in L2 maps logical channels to transport channels. Also, the MAC layer performs multiplexing for mapping a plurality of logical channels to one transport channel. The MAC layer is connected with an RLC layer corresponding to its upper layer through the logical channel. The logical channels are divided into control channels and traffic channels according to the types of information that they carry The control channels transmit control-plane information and the traffic channels transmit user-plane information.

The RLC layer of the second layer serves to perform segmentation and concatenation of data received from its upper layer to control a size of the data so that the lower layer may transmit the data on a radio link. Also, the RLC layer of the second layer provides three operation modes, i.e., a transparent mode (TM), an unacknowledged mode (UM), and an acknowledged mode (AM) to ensure various quality of services (QoS) required by each radio bearer (RB). In particular, the AM RLC layer performs a retransmission function through automatic repeat request (ARQ) for reliable data transmission.

In order to effectively transmit data using IP packets (e.g., IPv4 or IPv6) on a radio link with a narrow bandwidth, a PDCP (packet data convergence protocol) layer of the second layer (L2) performs header compression to reduce the size of IP packet headers which carry relatively long and unnecessary control information The resulting transmission of only necessary information in the headers of data increases the transmission efficiency of the radio link. Also, in the LTE system, the PDCP layer performs a security function. The security function includes a ciphering function preventing the third party from performing data monitoring and an integrity protection function preventing the third party from performing data manipulation.

The highest layer of L3, an RRC layer is defined in the control plane only and controls logical channels, transport channels, and physical channels for configuration, reconfiguration, and release of RBs. An RB is a logical path provided by L1 and L2 of the radio protocol to transfer data between the UE and the UTRAN. Generally, RB setup amounts to defining the features of radio protocol layers and channels required for a specific service and setting specific parameters and operation methods for the respective radio protocol layers and channels. The RBs are classified into signaling RB (SRB) and data RB (DRB). An SRB is used as a path for transmitting RRC messages in the control plane, and a DRB is used as a path for transmitting user data in the user plane.

As downlink transport channels carrying data from the network to the user equipments, there are provided a broadcast channel (BCH) carrying system information and a downlink shared channel (SCH) carrying user traffic or control messages. The traffic or control messages of a downlink multicast or broadcast service may be transmitted via the downlink SCH or an additional downlink multicast channel (MCH). Meanwhile, as uplink transport channels carrying data from the user equipments to the network, there are provided a random access channel (RACH) carrying an initial control message and an uplink shared channel (UL-SCH) carrying user traffic or control messages.

As downlink physical channels carrying information transferred to a downlink transport channel on a radio link between a network and a user equipment, there are provided a physical broadcast channel (PBCH) transmitting information of the BCH, a physical multicast channel (PMCH) transmitting information of the MCH, a physical downlink shared channel (PDSCH) transmitting information of the PCH and the downlink SCH, and a physical downlink control channel (PDCCH) (or DL L1/L2 control channel) transmitting information control information provided by the first layer and the second layer, such as downlink or uplink radio resource assignment information (DL/UL scheduling grant). Meanwhile, as uplink physical channels transmitting information transferred to an uplink transport channel to a radio interval between a network and a user equipment, there are provided a physical uplink shared channel (PUSCH) transmitting information of the uplink SCH, a physical random access channel (PRACH) transmitting RACH information, and a physical uplink control channel transmitting control information provided by the first layer and the second layer, such as HARQ ACK or NACK, scheduling request (SR), and channel quality indicator (CQI) report.

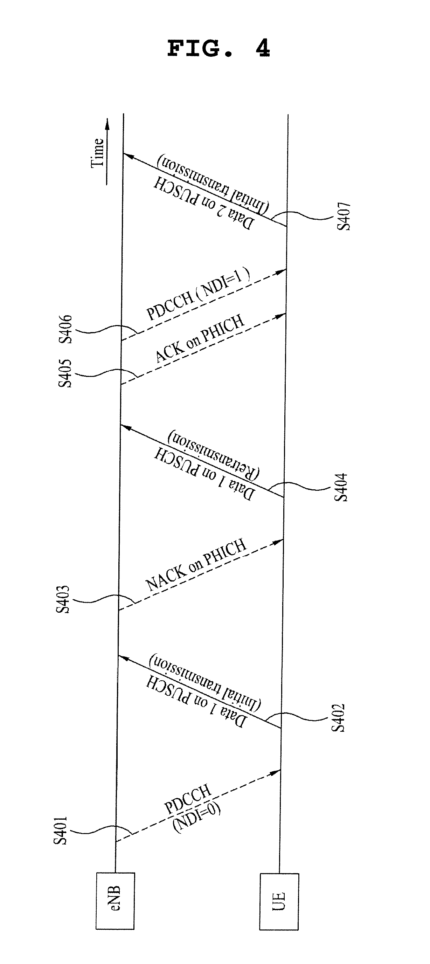

FIG. 4 illustrates an HARQ process in the LTE system.

While the following description is made of FIG. 4 in the context of an uplink situation where a UE is a transmitter, an eNB is a receiver, and the UE receives HARQ feedback information from the eNB, the same thing applies to the downlink.

Referring to FIG. 4, the eNB may transmit uplink scheduling information, that is, a UL grant to the UE on a PDCCH to allow the UE to transmit data in step S401. The UL grant may include an Identifier (ID) of the UE (e.g. a Cell-Radio Network Temporary Identifier (C-RNTI) or a semi-persistent scheduling C-RNTI), information about the positions of allocated radio resources (Resource block assignment), transmission parameters such as a modulation scheme/coding rate and a Redundancy Version (RV), a New data Indicator (NDI), etc.

The UE may monitor the PDCCH in every Transmission Time Interval (TTI) to detect its UL grant. Upon detection of its UL grant, the UE may transmit data, Data 1 herein, to the eNB on a PUSCH based on the UL grant in step S402. The data transmission may be carried out on a Medium Access Control Protocol Data Unit (MAC PDU) basis.

After the uplink transmission on the PUSCH, the UE awaits reception of HARQ feedback information on a Physical HARQ Indicator CHannel (PHICH) from the eNB. Upon receipt of an HARQ NACK for Data 1 from the eNB in step S403, the UE retransmits Data 1 to the eNB during a retransmission TTI in step S404. On the contrary, upon receipt of an HARQ ACK for Data 1 from the eNB (not shown), the UE discontinues the HARQ retransmission of Data 1.

Each time the UE transmits data using HARQ scheme, it counts the number of transmissions, CURRENT_TX_NB. If CURRENT_TX_NB satisfies a maximum number of transmissions set by an upper layer, the UE flushes a MAC PDU stored in an HARQ buffer.

If the UE receives an HARQ ACK for retransmitted Data 1 from the eNB in step S404 and receives a UL grant on the PDCCH in step S406, it may determine from an NDI field received on the PDCCH whether to perform an initial transmission of a new MAC PDU or a retransmission of a previously transmitted MAC PDU at the moment. The NDI field is 1 bit and is toggled in the order of 0→1→0→1→ ... each time a new MAC PDU is transmitted. For a retransmission, the NDI field has the same value as for an initial transmission. That is, the UE may determine whether to transmit or retransmit a MAC PDU by comparing the previous NDI with the current NDI.

Since an NDI set to '0' in step S401 is toggled to '1' in step S406, the UE is aware that the current transmission to be performed is an initial transmission. Thus the UE may transmit Data 2 on the PUSCH in step S407.

On the other hand, if the number of transmissions is equal to the maximum number of transmissions and thus the UE flushes the HARQ buffer, the reception error of a UL grant may cause problems. That is, the eNB requests an initial transmission to the UE twice by the UL grant due to the reception error of the UL grant and the NDI field is toggled twice. Consequently, because the value of the NDI field is equal to that of the NDI field set in the last received UL grant from the perspective of the UE, the UE may consider that the eNB requests retransmission of the already-flushed data from the HARQ buffer. Despite the absence of the transmission data in the HARQ buffer of the UE, uplink resources indicated by the UL grant are wasted. However, there is no specified operation that the UE is supposed to perform in this case.

### SUMMARY OF THE INVENTION

Accordingly, the present invention is directed to an HARQ processing method based on a maximum number of transmissions that substantially obviates one or more problems due to limitations and disadvantages of the related art.

An object of the present invention is to provide an efficient HARQ processing method of a UE, when the UE receives a UL grant indicating retransmission after flushing an HARQ buffer due to excess of a maximum number of transmissions.

Another object of the present invention is to provide an efficient HARQ processing method for preventing waste of uplink resources.

It will be appreciated by persons skilled in the art that the objects that could be achieved with the present invention are not limited to what has been particularly described hereinabove and the above and other objects that the present invention could achieve will be more clearly understood from the following detailed description taken in conjunction with the accompanying drawings.

To achieve these objects and other advantages and in accordance with the purpose of the invention, as embodied and broadly described herein, a method for performing an HARQ operation in a UE in a mobile communication system includes flushing an HARQ buffer corresponding to an HARQ process, if the number of transmissions in the HARQ process is equal to a maximum number of transmissions, receiving a downlink control channel signal including an uplink grant indicating the HARQ process from a base station, determining whether the HARQ buffer is empty, and transmitting new data via uplink resources indicated by the received uplink grant, if the HARQ buffer is empty.

The transmission of the new data in the uplink resources indicated by the received uplink grant can be carried out irrespective whether a new data indicator in the downlink control channel signal has been toggled, if the HARQ buffer is empty.

The downlink control channel signal may be a PDCCH signal indicating a C-RNTI of the UE.

The number of transmissions may be written as a predetermined status variable by the HARQ process, and when the number of transmissions is equal to the maximum number of transmissions, the value of the status variable may be equal to (the maximum number of transmissions-1).

The status variable is CURRENT_TX_NB and CURRENT_TX_NB may be set to '0' at an initial transmission and increase by 1 at each transmission timing of the HARQ process, irrespective of actual transmission.

The HARQ operation may be a synchronous HARQ operation.

In another aspect of the present invention, a UE for performing an HARQ operation in a mobile communication system includes a physical layer module including a reception module for receiving a downlink control channel signal including an uplink grant from a base station and a transmission module for transmitting an uplink signal to the base station, and a MAC layer module including at least one HARQ process module for managing the HARQ operation of the UE and at least one HARQ buffer corresponding to the at least one HARQ in a one-to-one correspondence. The at least one HARQ process module flushes an HARQ buffer corresponding to each of the HARQ process module, if the number of transmissions in the HARQ process module is equal to a maximum number of transmissions, and the MAC layer module determines whether an HARQ buffer indicated by the received uplink grant is empty, and instructs transmission of new data to the base station via uplink resources indicated by the received uplink grant, if the HARQ buffer is empty.

If the HARQ buffer is empty, the MAC layer module may transmit the new data in the uplink resources indicated by the received uplink grant, irrespective whether a new data indicator in the downlink control channel signal has been toggled.

The downlink control channel signal may be a PDCCH signal indicating a C-RNTI of the UE.

The number of transmissions may be written as a predetermined status variable and when the number of transmissions is equal to the maximum number of transmissions, the value of the status variable may be equal to (the maximum number of transmissions-1).

The status variable may be CURRENT_TX_NB and each HARQ process module may set CURRENT_TX_NB to '0' at an initial transmission and increases CURRENT_TX_NB by 1 at each transmission timing of the HARQ process module, irrespective of actual transmission of data stored in the HARQ buffer corresponding to the HARQ process module.

The UE may further include an RRC layer module for determining the maximum number of transmissions.

The HARQ operation is a synchronous HARQ operation.

According to the embodiments of the present invention, it is advantageous in that the operation of the UE in which upon receipt of a UL grant indicating retransmission of data flushed from an HARQ buffer due to excess of the maximum number of transmissions in HARQ, the UE determines that the UL grant is for an initial transmission irrespective of the NDI of the UL grant. As a result, uplink resources are saved.

It will be appreciated by persons skilled in the art that the present invention is not limited to what has been particularly described hereinabove. Other effects that are not described herein will be apparent from the following description to persons skilled in the art.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principle of the invention. In the drawings:

FIG. 1 illustrates an E-UMTS network configuration as an exemplary mobile communication system.

FIGs. 2 and 3 illustrate a radio interface protocol architecture based on the 3GPP radio access network standard between a UE and a UTRAN.

FIG. 4 illustrates an HARQ process in an LTE system.

FIG. 5 illustrates a problem caused by a reception error of a UL grant in the LTE system.

FIG. 6 illustrates an HARQ process according to an exemplary embodiment of the present invention.

FIG. 7 is a block diagram of a UE for performing an HARQ process according to an exemplary embodiment of the present invention.

### DETAILED DESCRIPTION OF THE INVENTION

Now, the above and other aspects of the present invention will be described in detail through preferred embodiments with reference to the accompanying drawings so that the present invention can be easily understood and realized by those skilled in the art. The detailed description is intended to explain exemplary embodiments of the present invention, rather than to show the only embodiments that can be implemented according to the invention. While the following description includes specific details to help comprehensive understanding of the present invention, it is clear to those skilled in the art that the present invention can be implemented without the specific details. For example, while the following description is made in the context of a 3^{rd} Generation partnership Project Long Term Evolution (3GPP LTE) system as a mobile communication system, it is applicable to other mobile communication systems except for specifics inherent to 3GPP LTE.

In some cases, known structures and devices are omitted or illustrated in block diagrams, focusing on main functions of each structure and device, so as not to obscure the concept of the present invention. Wherever possible, the same reference numbers will be used throughout this specification to refer to the same or like components.

Herein, the term 'User Equipment (UE)' refers to a mobile or fixed user terminal such as a terminal, a Mobile Station (MS), or the like. Also, the term 'eNode B (eNB)' refers to a terminal node of a network such as Node B, Base Station (BS), or the like, which communicates with the UE.

The afore-mentioned problem caused by a reception error of an Uplink (UL) grant will be descried below in detail.

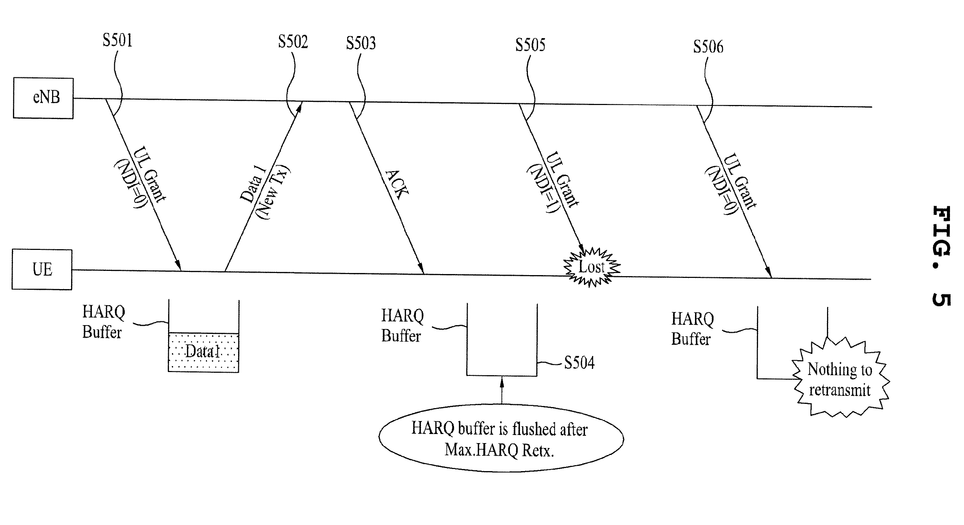

FIG. 5 illustrates a problem caused by a reception error of a UL grant in an LTE system.

Referring to FIG. 5, a UE may recieve a UL grant with an NDI set to '0' as information destined for the UE after determining from its cell Identifier (ID) (e.g. Cell-Radio Network Temporary Identifier (C-RNTI)) that there is information for the UE on a Physical Downlink Control Channel (PDCCH) in step S501.

Upon receipt of the UL grant, the UE checks the value '0' of the NDI set in the UL grant and compares it with the value of the NDI of a previous UL grant. Herein, it is assumed that the NDI value of the previous UL grant is '1'. Because the NDI value has been changed, the UE generates Data 1 as initial transmission data and stores it in an HARQ buffer.

To be more specific, the UE has a plurality of HARQ processes, which are synchronous. That is, each HARQ process is synchronously allocated to one TTI. For example, given eight HARQ processes in the UE in the LTE system, HARQ process 1 is allocated to TTI 1, HARQ process 2 to TTI 2, HARQ process 8 to TTI 8, HARQ process 1 again to TTI 9, and HARQ process 2 to TTI 10.

Due to the synchronous allocation of HARQ processes, an HARQ process corresponding to a TTI in which the UE has received the PDCCH for initial transmission of specific data is used for transmitting the data. For example, on the assumption that the UE receives a PDCCH including a UL grant in an N^{th} TTI to which HARQ process K corresponds, when the UE transmits data in an (N+4)^{th} TTI, it may use HARQ process K for the data transmission.

Each HARQ process is associated with a HARQ buffer. Accordingly, a particular HARQ process indicated by the UL grant received in step S501 obtains and stores a MAC PDU which corresponds to the UL grant, that is, Data 1, for initial transmission and retransmission.

In step S502, the UE initially transmits Data 1 stored in the HARQ buffer to an eNB using uplink resources indicated by the UL grant (New Tx).

The UE then awaits reception of HARQ feedback information on a PHICH from the eNB. If the eNB has received the MAC PDU successfully, it transmits an HARQ ACK indicating the successful reception to the UE in step S503.

Although the UE has received the HARQ ACK for Data 1, it continues to count the number of transmissions of Data 1 at the transmission timings of the HARQ process and to maintain a predetermined status variable CURRENT_TX_NB based on the count. Until before the number of transmissions is equal to a maximum number of transmissions, the UE keeps Data 1 in the HARQ buffer.

The data preservation in the HARQ buffer until the number of transmissions of the data reaches the maximum number of transmissions enables retransmission of the data after the eNB's suspension-based transmission of an HARQ ACK for the data. The suspension refers to discontinuing the UE's retransmission of data by transmitting an HARQ ACK for the data from the eNB even though it has failed to receive the data in the LTE system, in the case where retransmission from the UE is impossible. The UE's retransmission suspended by the suspension may resume when the UE receives a UL grant by PDCCH signaling from the eNB.

If the number of transmissions in the HARQ process is equal to the maximum number of transmission, the HARQ buffer for the HARQ process is flushed in step S504.

To indicate initial transmission to the UE, the eNB toggles the NDI to a value (i.e. '1') and transmits a UL grant with the toggled NDI to the UE. The UE may not receive the UL grant depending on its channel status in step S505. Consequently, the eNB determines that it has failed in receiving both initial transmission and retransmission versions of uplink data from the UE via uplink resources indicated by the UL grant.

Hence, the eNB toggles the NDI again and transmits a UL grant with an NDI set to '0' to the UE to indicate initial transmission in step S506.

Although the eNB has toggled the NDI twice to request a second initial transmission to the UE after the successful reception of Data 1, the UE actually receives another UL grant with an NDI set to '0' after receiving the UL grant with an NDI set to '0'.

Therefore, the UE determines that the UL grant indicates retransmission of Data 1. However, there is no Data 1 to be retransmitted in the HARQ buffer because it has already been flushed due to excess of the maximum number of transmissions. The UE cannot retransmit Data 1 in uplink resources indicated by the UL grant, resulting in waste of the uplink resources.

In this context, an exemplary embodiment of the present invention proposes a scheme in which upon receipt of a UL grant with an NDI set to a value indicating retransmission under a predetermined situation, a UE determines that the UL grant is for initial transmission and thus carries out an initial transmission of data to an eNB.

The predetermined situation is that after the number of transmissions of data stored in an HARQ buffer for a specific HARQ process is equal to a maximum number of transmissions and thus the HARQ buffer is flushed, a UL grant indicating retransmission in the HARQ process is initially received.

It can be said that the UL grant indicates retransmission, when the NDI of the UL grant is identical to that of the previous UL grant that the UE received, that is, the NDI of the UL grant was not toggled.

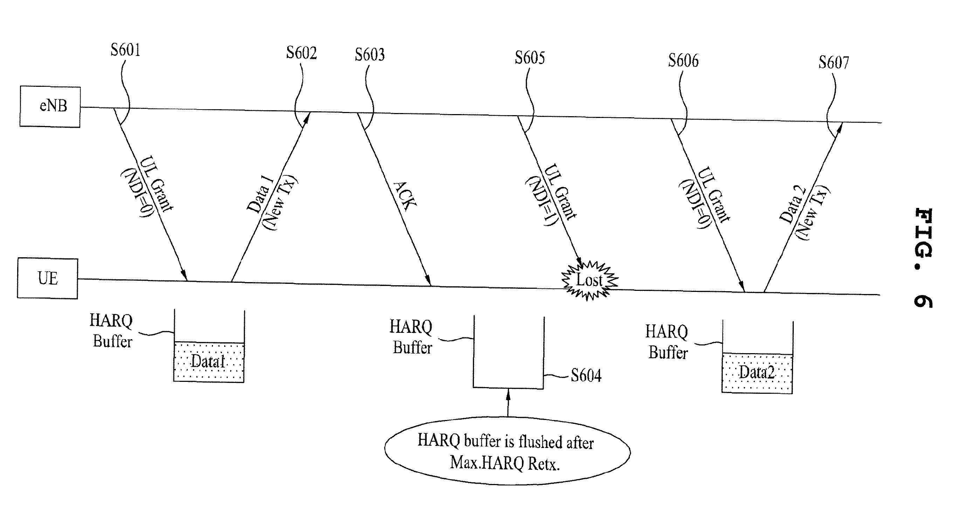

FIG. 6 illustrates an HARQ process according to an exemplary embodiment of the present invention.

It is assumed herein that a UE has a plurality of HARQ processes which run synchronously and thus each HARQ process is synchronously allocated to one TTI. In FIG. 6, one of the HARQ processes is focused on.

Referring to FIG. 6, the UE receives a UL grant with an NDI set to '0' from the eNB in step S601. While the UE may acquire the UL grant in a random access procedure, it is assumed that the UE receives the UL grant on a PDCCH indicating its C-RNTI in the exemplary embodiment of the present invention.

On the assumption that the previous UL grant received before the above UL grant has an NDI set to '1', the UE determines that the received UL grant indicates an initial transmission. Thus the UE stores a MAC PDU (i.e. Data 1) in an HARQ buffer for an HARQ process indicated by the UL grant and initially transmits the MAC PDU to the eNB in uplink resources indicated by the UL grant in step S602.

In step S603, the UE receives an HARQ ACK for the MAC PDU on the PHICH from the eNB. The HARQ ACK may be triggered to indicate successful reception of Data 1 or to impose the afore-described suspension.

Despite the reception of the HARQ ACK for Data 1, the UE continues to count the number of transmissions at the transmission timings of the HARQ process and to write the count as a predetermined status variable CURRENT_TX_NB, without flushing the HARQ buffer. If the number of transmissions is equal to a maximum umber of transmissions (or Max HARQ Retx) set by an upper layer before receiving a new UL grant indicating the HARQ process, the UE flushes the HARQ buffer for the HARQ process in step S604.

If the number of transmissions is equal to the maximum number of transmission, this implies that CURRENT_TX_NB is equal to (the maximum number of transmissions-1) because CURRENT_TX_NB is set to '0' at an initial transmission and increases by 1 at each coming transmission timing.

For instance, after CURRENT_TX_NB is set to '0' at an initial transmission, the number of transmissions is 4 (including the initial transmission) and CURRENT_TX_NB is '3', as the transmission timing has passed three times. That is, CURRENT_TX_NB is (the number of transmissions-1).

If the maximum number of transmissions is 4, the number of transmissions is equal to the maximum number of transmissions when CURRENT_TX_NB is 3. Hence, the condition for flushing the HARQ buffer is satisfied.

The HARQ flush condition is given as follows.

[Equation 1]

if CURRENT_TX_NB = (maximum number of transmissions)-1, flush the HARQ buffer

Then the eNB toggles an NDI (i.e. to '1') and transmits a UL grant with the NDI to the UE to indicate an initial transmission. In step S605, the UE may not receive the UL grant depending on its channel status. The eNB determines that it has failed in receiving both initial transmission and retransmission versions of uplink data based on the UL grant from the UE.

Hence, to indicate an initial transmission again, the eNB toggles the NDI again and transmits a UL grant with an NDI set to '0' to the UE in step S606.

Although the eNB has toggled the NDI twice to request a second initial transmission to the UE after the successful reception of Data 1, the UE actually receives another UL grant with an NDI set to '0' after the UL grant with the NDI set to '0' in step S601.

Therefore, the UE determines that the UL grant indicates retransmission of Data 1. However, there is no Data 1 to be retransmitted in the HARQ buffer because it has already been flushed due to excess of the maximum number of transmissions.

Accordingly, the UE generates a new MAC PDU (i.e. Data 2) to be initially transmitted and stores it in the HARQ buffer of the HARQ process. In step S607, the UE then transmits Data 2 to the eNB using uplink resources indicated by the UL grant received in step S606.

The operation of the UE in step S607 may be performed by an HARQ entity.

More specifically, when a UL grant is received on a PDCCH indicated by the C-RNTI of the UE and an HARQ buffer for an HARQ process which corresponds to the TTI of the UL grant is empty, the HARQ entity may obtain an MAC PDU from a multiplexing and assembly entity.

The HARQ entity delivers the MAC PDU together with HARQ information including a Redundancy Version (RV), etc. and the UL grant to the HARQ process.

Then the HARQ entity may instruct triggering of an initial transmission to the HARQ process.

The exemplary embodiment of the present invention defines the operation of the UE in which upon receipt of a UL grant indicating retransmission of data flushed from an HARQ buffer due to excess of the maximum number of transmissions in HARQ, the UE determines that the UL grant is for an initial transmission irrespective of the NDI of the UL grant. As a result, uplink resources are saved.

A description will be made below of the configuration of a UE for implementing the above-described HARQ operation method.

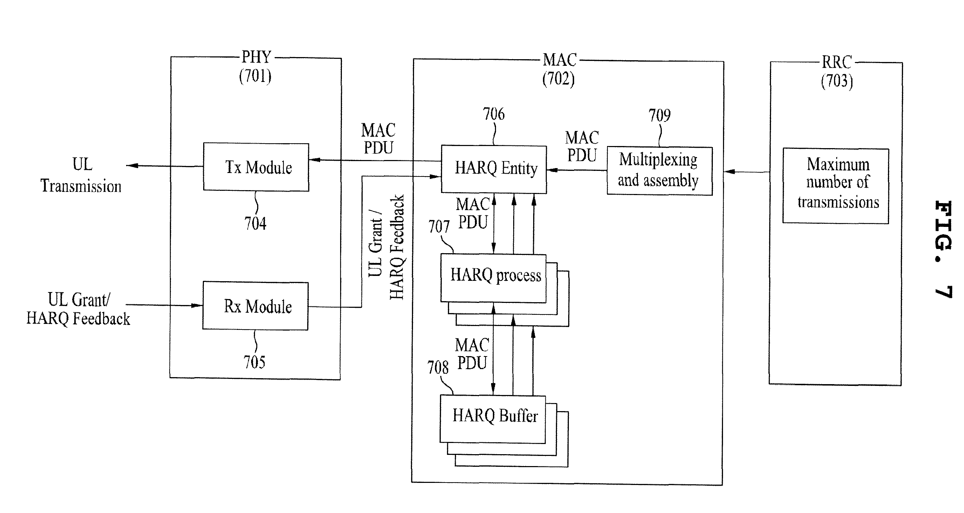

FIG. 7 is a block diagram of a UE for performing an HARQ process according to an exemplary embodiment of the present invention.

Referring to FIG. 7, the UE includes a PHY layer module 701 including a Transmission (Tx) module 704 and a Reception (Rx) module 705, a MAC layer module 702 including an HARQ entity module 706 for managing an HARQ operation of the UE, at least one HARQ process module 707, HARQ buffers 708 for the respective HARQ process modules 707, and a multiplexing and assembly module 709 for generating a transmission MAC PDU, and an RRC layer module 703.

The UE having the above configuration performs an HARQ operation as follows according to an exemplary embodiment of the present invention.

First, the HARQ entity module 706 identifies an HARQ process module 707 corresponds to a TTI. Upon receipt of a UL grant indicating the TTI from an eNB, the Rx module 705 delivers the received UL grant to the HARQ entity module 706. The UE compares an NDI set in the UL grant with the NDI of the previous UL grant. If values of the NDIs are different, which means that the NDI has been toggled, the HARQ entity module 706 obtains a MAC PDU to be initially transmitted from the multiplexing and assembly module 709 and delivers the MAC PDU along with the UL grant to an HARQ process module 707. The HARQ process module 707 may store the received MAC PDU in the HARQ buffer 708.

The stored MAC PDU may be used for initial transmission and retransmission. That is, the stored MAC PDU may be transmitted to the eNB on a PUSCH indicated by the UL grant through the Tx module 704 of the PHY layer module 701. The Rx module 705 may receive HARQ feedback information from the eNB on a PHICH and transmit it to the HARQ process module 707.

Meanwhile, the RRC layer module 703 may set a maximum number of transmissions to determine the number of transmission timings after which the stored MAC PDU will be flushed.

The HARQ process module 707 may maintain a status variable CURRENT_TX_NB to count the number of transmissions of the MAC PDU stored in the HARQ buffer 708. The HARQ process module 707 sets CURRENT_TX_NB to '0' at an initial transmission and increases it by 1 in each TTI mapped to the HARQ process irrespective of reception or non-reception of an HARQ ACK unless an NDI received along with a UL grant indicating the HARQ process is toggled.

If the number of transmissions is equal to the maximum number of transmissions, that is, CURRENT_TX_NB=(the maximum number of transmissions-1) with passage of time, the HARQ process module 707 flushes the HARQ buffer 708.

Although the eNB transmits a toggled NDI along with a UL grant indicating an HARQ process corresponding to the HARQ process module 707 to the UE to indicate an initial transmission, the UE may not receive the UL grant depending on its channel status. The eNB re-toggles the NDI, considering that both initial transmission and retransmission of the HARQ process module 707 based on the UL grant have failed, and transmits a UL grant with the re-toggled NDI to the UE.

Upon receipt of the twice-toggled NDI along with a UL grant, the Rx module 705 delivers the UL grant to the HARQ entity module 706. Although from the perspective of the eNB, it toggled the NDI twice to indicate an initial transmission twice to the HARQ process module 707, the NDI of the first UL grant received after the last received UL grant has not been toggled from the perspective of the UE. Therefore, the UE may determine that the UL grant with the re-toggled NDI indicates a retransmission of the MAC PDU flushed from the HARQ buffer 708. However, when the HARQ buffer 708 corresponding to the HARQ process module 707 indicated by the UL grant is empty, the HARQ entity module 706 instructs the HARQ process module 707 to trigger an initial transmission even though the NDI of the UL grant indicates a retransmission, that is, irrespective of the NDI in the exemplary embodiment of the present invention.

To this end, the HARQ entity module 706 obtains a new MAC PDU to be initially transmitted from the multiplexing and assembly module 709 and delivers the new MAC PDU and the UL grant to the HARQ process module 707. The HARQ process module 707 may store the new MAC PDU in an HARQ buffer 708 corresponding to the HARQ process. Then the buffered MAC PDU may be transmitted to the eNB on a PUSCH indicated by the UL grant through the Tx module 704 of the PHY layer module 701.

As is apparent from the above description of the present invention, upon receipt of a UL grant indicating retransmission of data that has been flushed from an HARQ buffer due to excess of a maximum number of transmissions, a UE determines that the received UL grant is for an initial transmission in an HARQ scheme. Therefore, uplink resources are saved.

While the HARQ scheme and the UE configuration for implementing the HARQ scheme have been described in the context of a 3GPP LTE system, they are applicable to other various mobile communication systems supporting a similar HARQ operation.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method for performing a Hybrid Automatic Repeat request (HARQ) operation in a User Equipment (UE) in a mobile communication system, comprising:
flushing an HARQ buffer corresponding to an HARQ process, if a number of transmissions in the HARQ process is equal to a maximum number of transmissions;
receiving a downlink control channel signal including an uplink grant indicating the HARQ process from a base station;
determining whether the HARQ buffer is empty; and
transmitting new data via uplink resources indicated by the received uplink grant, if the HARQ buffer is empty.

2. The method according to claim 1, wherein the transmission of the new data in the uplink resources indicated by the received uplink grant is carried out irrespective whether a new data indicator in the downlink control channel signal has been toggled, if the HARQ buffer is empty.

3. The method according to claim 1, wherein the downlink control channel signal is a Physical Downlink Control CHannel (PDCCH) signal indicating a Cell-Radio Network Temporary Identifier (C-RNTI) of the UE.

4. The method according to claim 1, wherein the number of transmissions is written as a predetermined status variable by the HARQ process, and when the number of transmissions is equal to the maximum number of transmissions, a value of the status variable is equal to (the maximum number of transmissions-1).

5. The method according to claim 4, wherein the status variable is CURRENT_TX_NB and CURRENT_TX_NB is set to '0' at an initial transmission and increases by 1 at each transmission timing of the HARQ process, irrespective of actual transmission.

6. The method according to claim 1, wherein the HARQ operation is a synchronous HARQ operation.

7. A User Equipment (UE) for performing a Hybrid Automatic Repeat reQuest (HARQ) operation in a mobile communication system, comprising:
a physical layer module including a reception module for receiving a downlink control channel signal including an uplink grant from a base station and a transmission module for transmitting an uplink signal to the base station; and
a Medium Access Control (MAC) layer module including at least one HARQ process module for managing the HARQ operation of the UE and at least one HARQ buffer corresponding to the at least one HARQ in a one-to-one correspondence,
wherein the at least one HARQ process module flushes an HARQ buffer corresponding to each of the HARQ process module, if a number of transmissions in the HARQ process module is equal to a maximum number of transmissions, and the MAC layer module determines whether an HARQ buffer indicated by the received uplink grant is empty, and instructs transmission of new data to the base station via uplink resources indicated by the received uplink grant, if the HARQ buffer is empty.

8. The UE according to claim 7, wherein if the HARQ buffer is empty, the MAC layer module transmits the new data via the uplink resources indicated by the received uplink grant, irrespective whether a new data indicator in the downlink control channel signal has been toggled.

9. The UE according to claim 7, wherein the downlink control channel signal is a Physical Downlink Control CHannel (PDCCH) signal indicating a Cell-Radio Network Temporary Identifier (C-RNTI) of the UE.

10. The UE according to claim 7, wherein the number of transmissions is written as a predetermined status variable and when the number of transmissions is equal to the maximum number of transmissions, a value of the status variable is equal to (the maximum number of transmissions-1).

11. The UE according to claim 10, wherein the status variable is CURRENT_TX_NB and each HARQ process module sets CURRENT_TX_NB to '0' at an initial transmission and increases CURRENT_TX_NB by 1 at each transmission timing of the HARQ process module, irrespective of actual transmission of data stored in the HARQ buffer corresponding to the HARQ process module.

12. The UE according to claim 7, further comprising a Radio Resource Control (RRC) layer module for determining the maximum number of transmissions.

13. The UE according to claim 7, wherein the HARQ operation is a synchronous HARQ operation.
